# EUROPEAN PATENT SPECIFICATION

(11) **EP 1 250 704 B1**
(45) Date of publication and mention of the grant of the patent: **15.06.2005**
(21) Application number: 00980075.6
(22) Date of filing: 20.10.2000
(51) Int. Cl.: G11B 33/04

(54) **ARRANGEMENT FOR SENDING COMPACT DISCS (CDs) OR LIKE PLATE-SHAPED DATA CARRIERS**
ARRANGEMENT ZUM VERSENDEN VON KOMPAKTDISKS (CD'S) ODER ÄHNLICHEN PLATTENFORMIGEN DATENMEDIEN
ARRANGEMENT DESTINE A EXPEDIER DES DISQUES COMPACTS (CD) OU D'AUTRES SUPPORTS DE DONNEES PLATS SIMILAIRES

(30) Priority: 20.10.1999 NL 1013347; 24.02.2000 US 184579 P
(43) Date of publication of application: 23.10.2002
(73) Proprietor: Fountain Technologies B.V., 2909 LD Capelle a/d IJssel (NL)
(72) Inventor: LANGERAK, Alfred, NL-3271 AH Mijnsheerenland (NL)
(74) Representative: Prins, Adrianus Willem, Mr. Ir.
(86) International application number: PCT/NL2000/000764
(87) International publication number: WO 2001/031654

(56) References cited:
- EP-A- 0 070 653
- EP-A- 0 855 288
- EP-A- 0 890 952
- WO-A-97/12365
- WO-A-97/20315
- WO-A-98/38644
- DE-U- 29 707 614
- FR-A- 2 554 422
- FR-A- 2 772 350
- GB-A- 2 320 360

## Description

The invention relates to an arrangement for sending compact discs (CDs) or like plate-shaped data carriers.

In this specification, reference will in each case be made to CDs as plate-shaped data carriers. However, it will be clear that this should be understood to include many types of data carriers, such as CD-ROM, CD-I, DVD, minidiscs, diskettes and other multimedia means.

It is known to send CDs via the mail. To that end, the CDs are locked in a CD box, which CD box is subsequently locked in an envelope. On the envelope, an address and, if required, a sender, as well as a proper postage are provided. For this, inter alia, envelopes are used which may be provided with protective means, such as air pads, foamed material or the like, for protecting the CD box. Moreover, the envelope serves to keep the CD box closed during sending. The envelope should at least prevent the possibility of removing the CD from the CD box during sending.

Such arrangement for sending CDs, comprising a special envelope and a CD box, is costly and proves not to be particularly convenient in practice. Moreover, such device is relatively heavy, which renders sending still more costly.

DE-U-29707614 discloses two methods for sending a compact disk by mail. In a first embodiment the CD itself is on either side provided with a label. The one on the data carrying side is a mere protecting foil whereas the other one is provided with name and address of the addressee and the postage. In a second embodiment the CD is provided with only one label containing the address of the addressee, after which the CD is placed in an envelope in which the CD with the label is locked. The envelope has transparent parts or windows through which the address is visible from the outside.

It is an object of the invention to provide an arrangement of the type described in the preamble, wherein said drawbacks of the known arrangements are avoided while the advantages thereof are maintained. To that end, an arrangement according to the invention is characterized by the features of claim 1.

The advantage achieved with an arrangement according to the invention is that a CD can be packaged and sent in a storage box, in particular a CD box, without the storage box having to be packaged in an outer package, such as an envelope. The box is at least kept closed and sealed by the label, so that it always remains visible whether the contents of the CD box has been manipulated, while, moreover, the addressing can readily be provided on or at the label. The outer appearance of the CD box need not be adversely affected thereby. The storage box can be used for storing the CD also after sending. Surprisingly, it has been found that a storage box manufactured from a relatively impact-resistant and elastic material can be of a sufficiently strong design to be used as dispatch box.

A CD box as, for instance, known from international patent publication WO97/20315 has proved to be particularly suitable for use within a device according to the present invention. Such CD box can simply be of a light and strong design and is in particular advantageous in the one-piece embodiment shown therein, because the pivot thereof has been integrated, as a result of which the CD box does not have to be completely covered by the label. Indeed, the pivot side cannot be opened, also not by forcing the box, as is possible with CD boxes of the jewelbox type. More generally, especially storage boxes manufactured in one piece are suitable for use within the invention.

In that respect, the additional advantage achieved is that at least a portion of the CD box can remain uncovered by the label, so that at least that portion of the CD box remains visible. Thus, the CD box remains recognizable also from the outside, which may be advantageous in terms of marketing. Moreover, this enables a considerable saving on material.

The label preferably comprises a postage or a field suitable therefor, for instance a postage print provided on the label in advance through printing. The label may be sold with or without the postage, as dispatch means for the CD box. In fact, the postage means can also be provided directly on a CD box.

The label is preferably of such design that it can be folded around a CD box from a flat position, for instance through the provision of second and third panels. Such advantageous embodiments are described in claims 3-7. The label is preferably dimensioned so that it can be folded with a proper fit around a CD box of usual dimensions. Preferably, at least along the longitudinal edges of the relevant panels, the label is provided with adhesive whereby the label can be adhered directly onto the CD box, for instance after the removal of a protective sheet in a manner known from the labeling technique.

In an advantageous embodiment, a device according to the invention is further characterized by the features of claim 11.

Inclusion of a chip or like memory-carrying means in the storage box offers the advantage that, for instance, a message is provided already upon opening of the storage box, for instance thematically related music, a spoken message or the like. In this respect, it is preferred that the user himself can influence at least a portion of the information on the relevant chip, or record thereon, so as to personalize the message to be conveyed.

In an alternative embodiment, a device according to the invention is further characterized by the features of claim 16.

The use of such data carrier offers the advantage that a consumer can independently provide or cause to provide information on the data carrier, while another portion can be pre-recorded, for instance with thematically selected music. In this manner, for instance, a personal message or a self-chosen piece of music can be added on the data carrier. It is preferred that the pre-recorded portion of the data carrier cannot be manipulated and that it be, for instance, of the write-protected or read-only type.

The invention further relates to an assembly of a device according to the invention and a locking element, characterized by the features of claim 18.

The use of such locking element offers the advantage that the data carrier is readily prevented from moving in the storage box, for instance during transport thereof. As a result, damage to the data carrier is prevented in a relatively simple manner.

The invention further relates to a locking element for CDs and like data carriers in a storage box, characterized by the features according to claim 22.

Such locking element offers the advantage that a CD or like data carrier can be locked in a storage box and secured against displacement therein even more properly.

A storage box for use in a device according to the invention is preferably manufactured from polypropylene or like plastic, such as a polypropylene-based mixture of plastics having comparable or better impact resistance and elasticity.

The invention further relates to a label for sending CD boxes and the like, characterized by the features of claim 23.

With such a label, CDs and the like can readily and without further outer package be sent in a type of CD box known per se. Preferably, the CD box has standard dimensions, to which the sizes of the label have been adapted.

The invention further relates to a method for sending CDs or like data carriers, which method is characterized by the features of claim 26.

With such a method, CDs can be sent in a simple and relatively advantageous manner, without involving much waste material. After all, the CD box can still be used as storage box also after sending. Moreover, relatively little postage has to be paid, since the CD box in sending condition is relatively light, due to the omission of the outer package. Further, during sending, a CD box has an attractive and recognizable appearance.

The invention further relates to a method for using a device or assembly according to the invention, characterized by the features of claim 29.

With such method, the advantage achieved is that in a particularly simple and pleasant manner, a message can be sent to an intended receiver, for instance as seasonal greeting, birthday greeting or for conveying at least partially personal information or the like.

The invention further relates to an assembly of a number of devices or assemblies according to the invention and a corresponding number of labels, packaged jointly. With this, a number of storage devices, at least assemblies according to the invention, can readily be offered for later use. Preferably, picture postcards or the like are packaged along therewith, which can be sent along with the storage box and data carrier. The devices, assemblies, data carriers and picture postcards are preferably thematically matched to one another.

The invention further relates to a method for conveying a message, in particular wishes or greetings, characterized by the feature of claim 30.

With such method, messages can be conveyed in a particularly original and informative fashion.

Further advantageous embodiments of a device, label and method according to the invention are given in the further subclaims.

To clarify the invention, exemplary embodiments of a device, label and method according to the invention will hereinafter be described with reference to the drawing. In this drawing:
Fig. 1 is a perspective, frontal view of a sending device according to the invention;
Fig. 2 is a rear view of a sending device according to Fig. 1;
Fig. 3 shows an alternative embodiment of a label according to the invention;
Fig. 4 shows a label according to the invention, in unfolded condition;
Fig. 5 is a sectional side elevation of a sending device according to invention, with locking element; .
Fig. 6 is a perspective view of a locking element according to the invention;
Fig. 7 is a side elevation of a package with two sending devices, labels and picture postcards; and
Fig. 8 shows a portion of a section, in side elevation, of a sending device according to the invention having a data carrier and chip.

In this specification, identical or corresponding parts have identical or corresponding reference numerals. In this specification, the invention will be explained with reference to a CD box. It will be understood that in this context, "CD box" is understood to include at least a storage box for CDs and comparable, substantially plate-shaped data carriers, such as CD-I, CD-ROM, DVD, diskettes, minidiscs and like and other multimedia. Such storage boxes are known from practice and are inter alia described in an embodiment which is particularly advantageous for use in the present invention, in international patent publication WO97/20315, which is considered to be incorporated herein by reference. The CD box will only be described in so far as this is necessary for an understanding of the present invention.

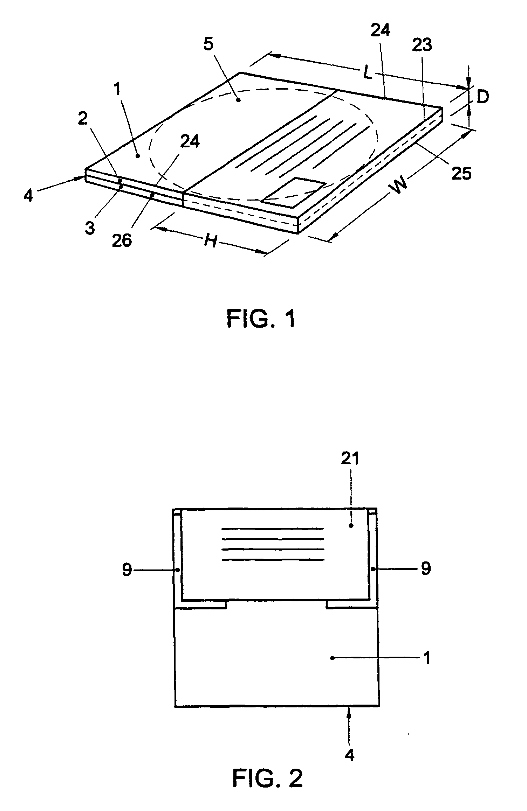

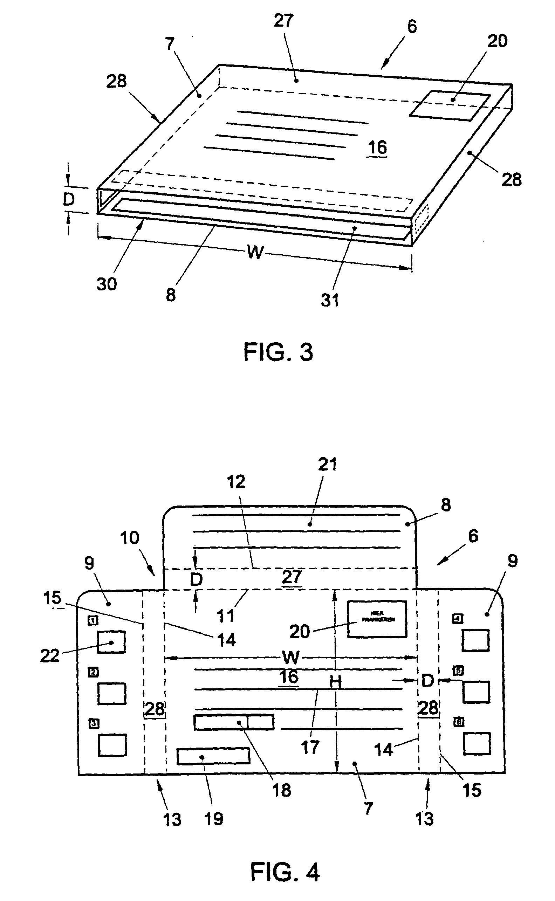

Fig. 1 shows a CD box 1, comprising a top box part 2 and a bottom box part 3, interconnected by a pivot 4. In the embodiment shown, the CD box 1 is injection-molded in one piece with integrated pivot 4. In the CD box 1, a CD 5 is secured in a manner known per se. Fixed on the CD box 1 is a label, which label 6 is shown in more detail in Fig. 4, in an advantageous embodiment.

The label 6 comprises a first panel 7, a second panel 8 and two third panels 9. The label is, for instance, manufactured from plastic-reinforced paper and has its rear side provided with an adhesive layer, for instance a pressure-sensitive adhesive or a contact adhesive. Such adhesives are generally known from the labeling technique. The second panel 8 is connected to the first panel 7 via first folding means 10. The first folding means 10 comprise a first folding line 11 and, extending parallel thereto, a second folding line 12. The first folding line 11 and second folding line 12 are spaced apart by a distance D approximately corresponding to the thickness D of the CD box 1. Similarly, via second folding means 13, the two third panels 9 are connected to two sides of the first panel 7 which extend at right angles to the first folding line 11. On each side, the second folding means 13 comprises a third folding line 14 and a fourth folding line 15 extending parallel thereto at a distance D. The first folding line 11 and the two third folding lines 14 intersect approximately adjacent the corners of the first panel 7. The distance W between the two third folding lines 14, i.e. the width of the first panel 7, approximately corresponds to the width W of the CD box 1. In the embodiment shown, the height H of the first panel 7 is less than the length L of the CD box 1, measured at right angles to the width W and the thickness D. In the exemplary embodiment shown, the height H is, for instance, half the length L. However, this can be varied as desired.

Provided on the first panel 7 is an address field 16, for instance comprising a number of lines 17, a section 18 for a postal code and, possibly, a logo 19. Moreover, on the first panel 7 there is provided a postage means 20, for instance a preprinted postmark or a field for a stamp or a frank to be provided later. Further, on the second panel 8, there is provided a sender field 21. On the third panel 9, for instance instructions for use can be printed in the form of a number of images and/or descriptions 22, depicted schematically by a series of rectangles.

A label 6 according to Fig. 4 can be used as follows.

A CD 5 is secured in a CD box 1, whereupon the CD box 1 is closed. Next, the first panel 7 is adhered to the top box part 2, such that the first folding line 11 extends along the longitudinal edge 23, remote from the pivot 4, of the top box part 2, while the third folding lines 14 extend along the side edges 24 of the top box part 2. Next, the second panel 8 is folded away downwards, such that an intermediate panel 27, located between the first folding line 11 and the second folding line 12, is folded against the lateral side of the CD box 1, on the side remote from the pivot. The third panels 9 are folded down in a similar manner, such that the fourth folding lines 15 abut against the longitudinal edges 26 of the bottom box part 3. This involves the intermediate panel 28, enclosed between the third folding line 14 and the fourth folding line 15, abutting against the relevant lateral edge of the CD box 1. Next, the third panels 9 are folded against the lower side of the bottom box part 3 and adhered thereto, whereupon the second panel 8 is glued over the third panels 9 and the lower side of the bottom box part 3, as shown in Fig. 2. In this manner, the CD box 1 is provided with a label 6 and at the same time sealed against opening unintentionally. Only by breaking the label 6 or removal thereof can the CD box 1 be re-opened and the CD 5 be taken therefrom. In addition, though the provision of a label, there is provided a postage means 20, at least a position for fitting a postage. Due to the specific positioning of the label 6, the proper position of the postage means 20 and of the address field 16 with the postal code 18 is directly provided, such that the storage and sending device thus designed can automatically be read out by mail sorting machines and the like. This facilitates the mail processing considerably.

Fig. 3 shows an alternative embodiment of a label 6 according to the invention. In this embodiment, the label 6 is of a somewhat sleeve-shaped design. The label 6 comprises a front panel 7, a rear panel 8, two side panels 28 comparable with the intermediate panels 28 of a label according to Fig. 4 and an end panel 27, comparable with the intermediate panel 27 of a label 6 according to Fig. 4. In the embodiment shown in Fig. 3, the side panels 28 and the end panel 27 are fixedly connected to the first panel 7 and the second panel 8. This label 6 has an open side 30 on the side opposite the end panel 27. The distance D between the first panel 7 and the second panel 8 substantially corresponds to the thickness D of the CD box 1, the width W approximately corresponds to the width W of the CD box 1. This means that by its side remote from the pivot 4, the CD box can readily be inserted through the open side 30 into the label 6, between the relevant panels. Adjacent the open side, the first panel 7, the second panel 8 and the side panels 28 are provided with strips 31 of adhesive, in particular pressure-sensitive adhesive, whereby the relevant panels can be secured against the outer side of the CD box 1. If necessary, larger strips or surfaces may be provided with such adhesive, for a better adhesion. On the first panel 7 there is again provided an address field 16, as well as a postage means 20, at least a field intended therefor. On the second panel 8 there is again provided a sender field 21 (not shown). A label 6 according to Fig. 3 can of course be used in the same or a similar manner as a label 6 according to Fig. 1.

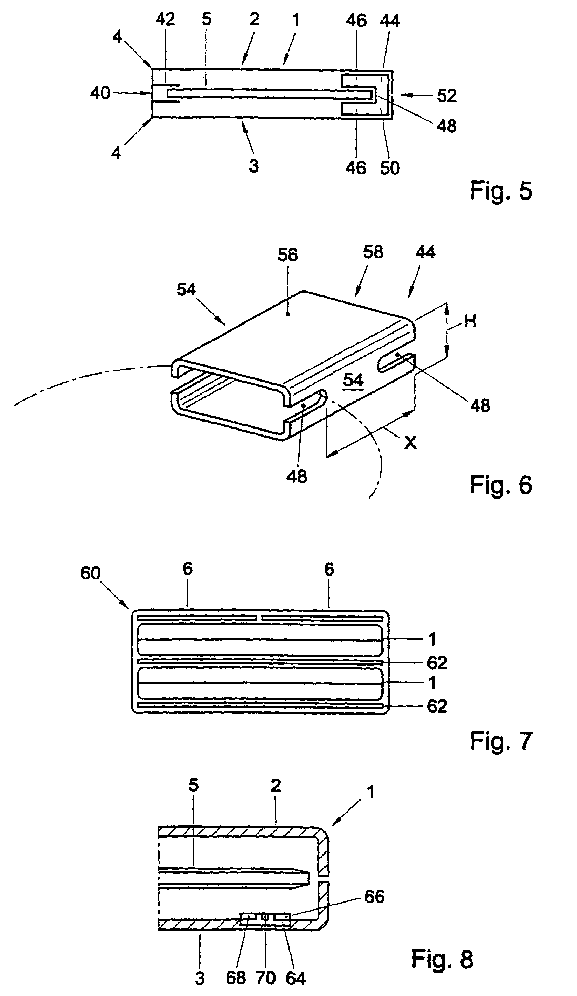

Fig. 5 shows a sending device according to the invention, comprising a storage device as described earlier, wherein, on a wall part 40 between two pivots 4, two securing elements 42 are provided, wherebetween a longitudinal edge of a data carrier 5, such as a CD, can be locked. Such means, shown by way of illustration only, are described in more detail in the above-mentioned patent publication WO 97/20315, incorporated herein by reference. On the side remote from the pivots 4, a locking element 44 is provided in the box 1, which locking element, in the embodiment shown, is substantially U-shaped with two legs 46 extending parallel to each other and bounding an intermediate slot 48. The locking element 44 is slid with its slot 48 over the longitudinal edge of the data carrier 5, preferably such that only a non-recorded portion thereof is contacted, after which the box is closed around the data carrier 5 and the locking element 44. The two box parts 2, 3 abut against the legs 46 of the locking element 44, thereby clamping the locking element 44. This involves the base part 50 of the locking element 44, to which the legs 46 are attached, abutting against the side 52 of the storage box 1 remote from the wall part 40, i.e. the side where the box can be opened, so that displacement of the data carrier 5 within the storage device 1 is prevented almost completely and, hence, the storage device is be sent more suitably without the risk of damage to the data carrier. Preferably, the locking element 44 is of the lightest possible design, so as to save weight. To that end, it may, for instance, be manufactured from a foam material or be of hollow design.

Fig. 6 shows an alternative embodiment of a locking element 44 according to the invention, as a hollow, tubular body. The height H hereof approximately corresponds to the inside distance between the two box parts 2, 3 in closed condition. The locking element 44 comprises two side faces 54 interconnected by two wall faces 56. Provided in the side faces 54 are two slots 48, comparable with the slot 48 as described with respect to Fig. 5. Thus, the locking element 44 can be slid over a longitudinal edge of the data carrier 5, which data carrier is drawn in lines. The distance X between the longitudinal edge of the data carrier 5, when the locking element 44 is fully slid-on, and the longitudinal edge 58 of the locking element 44 remote therefrom, is chosen so that thus, the position of the data carrier and the locking element 44 as shown in Fig. 5 can be obtained, so that any displacement of the data carrier 5 within the closed storage device 1 is prevented. It is observed that a locking element 44 according to the invention may, for instance, also be peg-shaped, so that it can be clamped on a longitudinal edge. Also, two or more slots 48 may be provided one above the other, for use in sending devices for more than one CD.

Fig. 7 shows a package 60, for instance a cellophane package, wherein two storage devices 1, two labels 6 and two picture postcards 62 are packaged, while in the storage devices 1, data carriers, in particular CDs 5, are locked. The CDs are pre-recorded, i.e. music has been recorded thereon, for instance. The music and the picture postcards 62 may be thematically related, for instance a Christmas card and Christmas music, a birthday card and birthday music, or like thematic combinations. In an advantageous embodiment, the data carrier is designed as a type on which, on at least a portion thereof, information can be recorded by a user, for instance a CD re-writable, a diskette or the like, such that a user can add his own information. Thus, the data carrier can be rendered more personal. A pre-recorded portion can be protected against manipulation, for instance by rendering this.portion "read only". Such techniques are generally known. A package 60 according to the invention can of course contain different numbers of storage devices, picture postcards, labels and the like, according to the consumers' wishes. The picture postcard 62 can, for instance, be designed so that it can be written on and locked in the storage device 1 together with the CD, prior to labeling. As a matter of fact, it is observed that the same concept can be applied to the sending devices already known.

Fig. 8 shows a portion of a cross section of a sending device according to the invention, showing a part of the top box part 2 and the bottom box part 3, and a portion of a CD 5. Provided in or on the wall of the bottom box part 3 is a chip 64, at least an electronic component comprising memory means 66 and sound reproduction means 68. The chip 64 is designed for reproducing, for instance, music or speech, recorded in the memory means 66, by the means 68. Such chips 64 are known per se and are, for instance, activated by opening the box 1. To that end, the box 1 is substantially light-proof and a light-sensitive cell 70 is provided which, upon sufficient light incidence, activates the chip 64. Of course, other means for activating the chip 64 may be used as well, for instance an approach switch activated through removal of the data carrier 5, a press button which is held in an "off" state by the data carrier 5 and moves into an "on" state upon removal of the data carrier, or other means known per se from practice. On the chip 64, a spoken message or a musical composition can, for instance, be recorded, preferably related to information recorded on the data carrier. Preferably, the information recorded on the chip 64 can be provided thereon by a user himself.

With a sending device according to the invention, a user can convey a message, for instance a Christmas greeting, a birthday greeting, New Year greeting or the like, while different expressions can be conveyed at the same time. Indeed, on the data carrier and on a picture postcard, if any, as well as, for instance, in the chip, the same or comparable, thematically related messages or parts thereof can be recorded.

The invention is not limited to the exemplary embodiments shown in the specification and drawings. Some variations thereof are possible within the framework of the invention as set forth in the claims.

Thus, a label according to the invention may be designed in different manners and in different materials, for instance entirely in plastic. In this respect, it is preferred that such a material be used that it is possible to write thereon with ink without the ink being easily removable. The panels may have different dimensions, as long as it can be adhered around the storage box with a proper fit. A label according to the invention may, with or without a suitable CD storage box, be offered by postal companies, provided with an appropriate indication of prepaid postage, to obtain a device which is directly ready-to-send. However, separate stamps or franks may be used as well. A label according to the invention may, of course, also be of such design that the entire CD box is enclosed thereby. However, this is not necessary for an appropriate use of the invention. To enhance the recognizability, a universal color may be used for the CD box. Of course, such universal CD box may also be provided with a specific print. Other suitable materials for manufacturing a substantially unbreakable CD box which are within the scope of the skilled artisan are explicitly understood to fall within the framework of the invention. As address field, there may also be provided on the first panel a surface on which an address sticker can be adhered.

These variations are understood to fall within the normal scope of a skilled artisan.

## Claims

1. An arrangement for sending compact discs or like plate-shaped data carriers, comprising a storage box (1) for the data carrier and a label (6), wherein the label (6) preferably comprises at least an address field (16), the storage box (1) being manufactured from plastic of high impact resistance and relatively high elasticity, such that the storage box (1) is at least substantially unbreakable, the storage box (1) comprising at least two box parts (2, 3) which are connected to each other via pivot means (4), such that the box (1) can be opened and closed, the label (6) being designed for attachment on the storage box (1), such that the two box parts (2, 3) in closed condition are interconnected by the label (6), at a distance from the pivot means (4), the arrangement being such that a data carrier in the storage box (1) can be locked between the box parts (2, 3), whereupon the storage box (1) can be closed off and sealed by the label (6) and sent by mail, without further outer package, to an addressee stated on the label (6); wherein the label comprises a first panel (7) on which the address field (16) is at least substantially provided, said first panel (7) being connected to a second panel (8) via folding means, the first panel (7) extending, in use, on a first one of the two box parts and being secured thereon, while the second panel (8) extends on the opposite, second box part and is secured thereon and the folding means extend at least substantially against a lateral side of the storage box (1); wherein the first panel (7) and the second panel (8) are interconnected by an intermediate panel (27) which is connected via respective, substantially parallel folding lines (11, 12), to the first and the second panel (7, 8), the distance (D) between the folding lines approximately corresponding to the thickness of the storage box, the intermediate panel abutting against a lateral side of the box which can be opened; and wherein while on two opposite sides of the first panel (7), two third panels (9) are connected to the first panel (7), such that the first panel (7) can be secured on a first box part, and, when the storage box is closed, the third panels (9) can be secured against the side of the second box part facing away from the first box part

2. An arrangement according to claim 1, wherein the label (6) comprises an indication (20) of prepayment of the postage due.

3. An arrangement according to claim 1 or 2, wherein the distance (W) between the third panels (9) is approximately equal to the width of the storage box (1), measured parallel to the sides of the box parts (2, 3) which are connected by the pivot means (4).

4. An arrangement according to any one of claims 1-3, wherein the second panel (8) is connected, via the folding means, to the first panel (7) along a side of the first panel at right angles to the sides to which the third panels (9) are connected, the length of the third panels (9) and the first panel (7), measured at right angles to the second panel, being equal to or less than the relevant length of the storage box (1).

5. An arrangement according to any one of the preceding claims, wherein a sender field (21) is provided on the label.

6. An arrangement according to any one of the preceding claims, wherein the storage box (1) is manufactured from polypropylene or a like relatively elastic, flexible plastic, the storage box preferably being manufactured in one.

7. An arrangement according to any one of the preceding claims, wherein a chip (64) or like memory-carrying means is included in the storage box (1), provided with sound-producing means, said chip preferably being activated at least during opening of the storage box.

8. An arrangement according to claim 7, wherein the chip is a music chip.

9. An arrangement according to claim 7 or 8, wherein the chip is programmable, at least designed so that a sound, such as music or speech, is selectively recordable thereon by a user.

10. An arrangement according to any one of the preceding claims, wherein at least one data carrier is included with music, speech or other data recorded thereon.

11. An arrangement according to any one of claims 7-9 and 10, wherein data recorded on the data carrier (5) is subject-related, or at least thematically related, to sound, at least data, recorded in the chip.

12. An arrangement according to any one of the preceding claims, wherein a data carrier (5) is provided of a type on which information can be recorded by a consumer, at least a portion of the available memory space on the data carrier being pre-recorded and a portion of the data carrier being free for adding information by the user.

13. An arrangement according to claim 12, wherein the pre-recorded portion of the data carrier is write-protected.

14. An assembly of an arrangement according to any one of the preceding claims and a locking element (44), wherein the locking element is designed for positioning on or adjacent an edge of a data carrier (5) to be placed in the storage box (1), such that it is locked between the box parts (2, 3), and that when the storage box (1) is closed, movement of the data carrier (5) within the storage box is substantially prevented.

15. An assembly according to claim 14, wherein the locking element (44) comprises at least one slot (48) with which it is slidable over a longitudinal edge of a data carrier (5), the locking element (44) having a thickness (H), measured approximately at right angles to an inserting direction of the slot, which substantially corresponds to the corresponding distance of the inwardly facing side of the box parts.

16. An assembly according to claim 15, wherein at least two slots (48) are provided in the locking element (44), above or next to each other, substantially parallel to each other.

17. An assembly of a storage device according to any one of claims 1-13 or an assembly according to any one of claims 14-16 and a picture postcard (62), wherein the picture postcard is locked in the storage box or between the storage box and the label.

18. A label (6) for sending a storage box (1) with CD or like data carrier included therein, said storage box (1) having the usual thickness and width of a jewelbox-type CD box, wherein the label (6) comprises a first panel (7) and a second panel (8) connected thereto, an intermediate panel (27) being provided between the first (7) and the second panel (8), said intermediate panel (27) having a height (D) between the first (7) and the second panel (8) that approximately corresponds to said thickness of the storage box (1), and at least the first (7) and the second panel (8) being provided, along a portion of their longitudinal edges, with adhesives for fixing them on respectively a front and rear side of the storage box (1), such that the intermediate panel (27) abuts against a side of the storage box (1) which can be opened during use and wherein a third panel (9) is connected on either side of the first panel (7), said third panels (9) being arranged for attachment thereof over at least opposite sides of the storage box (1) the width (W) of the first panel enclosed between the third panels (9) being approximately equal to said width of the storage box (1).

19. A label according to claim 18, wherein the second panel is connected to the third panels, such that the label is somewhat sleeve-shaped and can be slid from a side over the storage box and subsequently adhered thereon.

20. A method for sending a CD or like data carrier using an arrangement according to anyone of claims 1-13 or an assembly according to anyone of claims 14-17, wherein the CD is locked in a CD box, whereafter a label is adhered on the CD box, such that the label covers at least a side of the CD box to be opened, remote from the pivoting side thereof and over two further sides, and is fitted on the two parts pivoting relative to each other, while an address and postage means are provided on the label, at least on the CD box, and the CD box is sent without further outer package.

21. A method according to claim 20, wherein the postage means are printed on the label, at least fixedly connected thereto, the label being sold together with the postage means.

22. A method according to claim 21 or 22, wherein an address sticker or like addressing means is provided on the CD box, next to or at least partially over the label.

23. A method for use of an arrangement according to any one of claims 1-13 or an assembly according to any one of claims 14-17, wherein in the storage box, a data carrier is locked, such as a CD or diskette, a portion of which is provided with pre-recorded music or other data, said portion being preferably protected against manipulation by a read-only protection, a further portion being provided with data by a user.

24. A method for conveying a message, in particular wishes or greetings, wherein a thematically selected data carrier with the desired information is sent to an intended receiver in an arrangement according to any one of claims 1-13 or an assembly according to any one of claims 14-17, wherein, preferably, the sender himself provides or causes to provide a part of the information.

25. A set of a number of arrangements according to any one of claims 1-13 or a number of assemblies according to any one of claims 14-17 and a corresponding number of labels, packaged jointly.

26. A set according to claim 25, wherein a corresponding number of picture postcards or the like is packaged along.

27. A set according to claim 25 or 26, wherein the arrangements and/or assemblies, in particular packaged-along data carriers and picture postcards, are matched to each other thematically.

## Patentansprüche

1. Vorrichtung zum Versenden von Compact Discs oder ähnlicher plattenförmiger Datenträger, mit einer Aufbewahrungsbox (1) für den Datenträger und einem Etikett (6), wobei das Etikett (6) vorzugsweise mindestens ein Adressfeld (16) aufweist, wobei die Aufbewahrungsbox (1) Kunststoff mit hoher Stoßfestigkeit und relativ hoher Elastizität aufweist, derart, dass die Aufbewahrungsbox (1) mindestens im Wesentlichen unbrechbar ist, wobei die Aufbewahrungsbox (1) mindestens zwei Box-Teile (2,3) aufweist, welche über Schwenkvorrichtungen (4) derart miteinander verbunden sind, dass die Box (1) geöffnet und geschlossen werden kann, wobei das Etikett (6) zur Befestigung an der Aufbewahrungsbox (1) derart ausgebildet ist, dass die beiden Box-Teile (2,3) im geschlossenen Zustand durch das Etikett (6) mit Abstand von der Schwenkvorrichtungen (4) miteinander verbunden sind, wobei die Anordnung derart ausgebildet ist, dass ein in der Aufbewahrungsbox (1) angeordneter Datenträger zwischen den Box-Teilen (2,3) eingeschlossen werden kann, woraufhin die Aufbewahrungsbox (1) geschlossen, mittels des Etiketts (6) versiegelt und ohne weitere Außenverpackung per Post an einen auf dem Etikett (6) angegebenen Adressaten versandt werden kann; wobei das Etikett (6) einen ersten Abschnitt (7) aufweist, an dem das Adressfeld (16) zumindest im Wesentlichen angeordnet ist, wobei der erste Abschnitt (7) über eine Falteinrichtung mit einem zweiten Abschnitt (8) verbunden ist; wobei der erste Abschnitt (7) bei Verwendung an einem ersten der beiden Box-Teile verläuft und an diesem gesichert ist, während der zweite Abschnitt (8) an dem entgegengesetzten, zweiten Box-Teil verläuft und an diesem gesichert ist, und die Falteinrichtung zumindest im Wesentlichen gegen eine Lateralseite der Aufbewahrungsbox (1) verläuft, wobei der erste Abschnitt (7) und der zweite Abschnitt (8) durch einen Zwischenabschnitt (27) miteinander verbunden sind, der über jeweilige im Wesentlichen parallele Faltlinien (11,12) mit dem ersten und dem zweiten Abschnitt (7,8) verbunden ist, wobei der Abstand (D) zwischen den Faltlinien im Wesentlichen der Dicke der Aufbewahrungsbox (1) entspricht, wobei der Zwischenabschnitt an einer Lateralseite der Box anliegt, die geöffnet werden kann; und wobei an zwei gegenüberliegenden Seiten des ersten Abschnitts (7) zwei dritte Abschnitte (9) derart mit dem ersten Abschnitt (7) verbunden sind, dass der erste Abschnitt (7) an dem ersten Box-Teil gesichert werden kann, und, wenn die Aufbewahrungsbox (1) geschlossen ist, die dritten Abschnitte (9) in Anlage an der von dem ersten Box-Teil abgewandten Seite des zweiten Box-Teils gesichert werden können.

2. Anordnung nach Anspruch 1, bei der das Etikett (6) einen Hinweis (20) auf Vorabzahlung der fälligen Postversandgebühr aufweist.

3. Anordnung nach Anspruch 1 oder 2, bei der der Abstand (W) zwischen den dritten Abschnitten (9) ungefähr gleich der Breite der Aufbewahrungsbox (1) ist, gemessen parallel zu den Seiten der Box-Teile (2, 3), die durch die Schwenkvorrichtungen (4) miteinander verbunden sind.

4. Anordnung nach einem der Ansprüche 1-3, bei der der zweite Abschnitt (8) über die Falteinrichtung entlang einer Seite des ersten Abschnitts, die rechtwinklig zu den mit den dritten Platten (9) verbundenen Seiten verläuft, mit dem ersten Abschnitt (7) verbunden ist, wobei die Länge der dritten Abschnitte (9) und des ersten Abschnitts (7) gemessen im rechten Winkel zu dem zweiten Abschnitt gleich der relevanten Länge der Aufbewahrungsbox (1) oder kleiner als diese Länge ist.

5. Anordnung nach einem der vorhergehenden Ansprüche, bei der ein Absenderfeld (21) auf dem Etikett angeordnet ist.

6. Anordnung nach einem der vorhergehenden Ansprüche, bei der die Aufbewahrungsbox (1) aus Polypropylen oder einen ähnlichen relativ elastischen, flexiblen Kunststoff hergestellt ist, wobei die Aufbewahrungsbox vorzugsweise einstückig hergestellt ist.

7. Anordnung nach einem der vorhergehenden Ansprüche, bei der die Aufbewahrungsbox (1) mit einem Chip (64) oder einer ähnlichen speicher-tragenden Einrichtung versehen ist, die mit einer Tonerzeugungsvorrichtung bestückt ist, wobei der Chip vorzugsweise mindestens während des Öffnens der Aufbewahrungsbox aktiviert wird.

8. Anordnung nach Anspruch 7, bei der der Chip ein Musikchip ist.

9. Anordnung nach Anspruch 7 oder 8, bei der der Chip programmierbar ist und mindestens derart ausgelegt ist, dass der Benutzer einen Ton, wie z.B. Musik oder Sprechäußerungen, selektiv auf dem Chip aufzeichnen kann.

10. Anordnung nach einem der vorhergehenden Ansprüche, die mit mindestens einem Datenträger, auf dem Musik, Sprechäußerungen oder andere Daten aufgezeichnet sind, versehen ist.

11. Anordnung nach einem der Ansprüche 7-9 und 10, bei dem auf dem Datenträger (5) aufgezeichnete Daten gegenstandsbezogen oder zumindest themenbezogen zu der Ton- oder zumindest der Datenaufzeichnung auf dem Chip sind.

12. Anordnung nach einem der vorhergehenden Ansprüche, bei der ein Datenträger (5) eines Typs vorgesehen ist, auf dem ein Kunde Information aufzeichnen kann, wobei mindestens ein Teil des verfügbaren Speicherraums auf dem Datenträger vor-aufgezeichnet ist und ein Teil des Datenträgers frei für ein Hinzufügen von Information durch den Benutzer ist.

13. Anordnung nach Anspruch 12, der der vor-aufgezeichnete Teil des Datenträgers schreibgeschützt ist.

14. Baugruppe aus einer Anordnung nach einem der vorhergehenden Ansprüche und einem Verriegelungselement (44), wobei das Verriegelungselement zur Positionierung an oder nahe einem Rand eines in der Aufbewahrungsbox (1) zu platzierenden Datenträgers (5) derart ausgebildet ist, dass dieser zwischen den Box-Teilen (2,3) eingeschlossen ist und, wenn die Aufbewahrungsbox (1) geschlossen ist, eine Bewegung des Datenträgers (5) in der Aufbewahrungsbox im Wesentlichen verhindert wird.

15. Baugruppe nach Anspruch 14, bei der das Verriegelungselement (44) mindestens einen Schlitz (48) aufweist, mittels dessen es über einen Längsrand eines Datenträgers (5) gleitbar ist, wobei das Verriegelungselement (44) eine ungefähr rechtwinklig zu einer Einführungsrichtung des Schlitzes gemessene Dicke (H) hat, die im Wesentlichen gleich dem entsprechenden Abstand der nach innen gewandten Seite der Box-Teile ist.

16. Baugruppe nach Anspruch 15, bei der in dem Verriegelungselement (44) mindestens zwei Schlitze (48) übereinander oder nebeneinander und im Wesentlichen parallel zueinander vorgesehen sind.

17. Baugruppe aus einer Aufbewahrungsvorrichtung nach einem der Ansprüche 1-13 oder einer Baugruppe nach einem der Ansprüche 14-16 und einer Bildpostkarte (62), wobei die Bildpostkarte in der Aufbewahrungsbox oder zwischen den Aufbewahrungsbox und dem Etikett eingeschlossen ist.

18. Etikett (6) zum Versenden einer Aufbewahrungsbox (1), in der eine CD oder ein ähnlicher Datenträger enthalten ist, wobei die Aufbewahrungsbox (1) die übliche Dicke und Breite einer CD-Hülle vom Jewelbox-Typ hat, wobei das Etikett (6) einen ersten Abschnitt (7) und einen mit diesem verbundenen zweiten Abschnitt (8) und einen zwischen dem ersten (7) und dem zweiten Abschnitt (8) angeordneten Zwischenabschnitt (27) aufweist, wobei der Zwischenabschnitt (27) eine Höhe (D) zwischen dem ersten (7) und dem zweiten Abschnitt (8) hat, die ungefähr der Dicke der Aufbewahrungsbox (1) entspricht, und wobei mindestens der erste (7) und der zweite Abschnitt (8) entlang eines Teils ihrer Längsränder mit Haftvermittlern versehen sind, um die Abschnitte an einer Vorder- bzw. Rückseite der Aufbewahrungsbox (1) derart zu befestigen, dass der Zwischenabschnitt (27) an einer Seite der Aufbewahrungsbox (1) anliegt, die bei Verwendung geöffnet werden kann, und wobei an jeder Seite des ersten Abschnitts (7) ein dritter Abschnitt (9) befestigt ist, wobei die dritten Abschnitte (9) zur Befestigung mindestens an gegenüberliegenden Seiten der Aufbewahrungsbox (1) angeordnet sind, wobei die Breite (W) des zwischen den dritten Abschnitten (9) eingeschlossenen ersten Abschnitts im Wesentlichen gleich der Breite der Aufbewahrungsbox (1) ist.

19. Etikett nach Anspruch 18, bei dem der zweite Abschnitt derart mit den dritten Abschnitten verbunden ist, dass das Etikett leicht hülsenförmig ist und von einer Seite her über die Aufbewahrungsbox geschoben und anschließend in Anhaftung mit dieser gebracht werden kann.

20. Verfahren zum Versenden einer CD oder eines ähnlichen Datenträgers mittels einer Anordnung nach einem der Ansprüche 1-13 oder einer Baugruppe nach einem der Ansprüche 14-17, bei dem die CD in einer CD-Box eingeschlossen wird, woraufhin ein Etikett derart an der CD-Box in Anhaftung gebracht wird, dass das Etikett mindestens eine zu öffnende Seite der CD-Box, die von der Schwenkseite der CD-Box entferrit ist, bedeckt und über zwei weitere Seiten verläuft, und an den relativ zueinander verschwenkbaren beiden Teilen befestigt wird, wobei an dem Etikett mindestens an der CD-Box Adress- und Frankier-Elemente angebracht werden und die CD-Box ohne weitere Außenverpackung versandt wird.

21. Verfahren nach Anspruch 20, bei dem die Frankier-Elemente auf das Etikett gedruckt werden oder zumindest fest mit diesem verbunden werden und das Etikett zusammen mit den Frankier-Elementen verkauft wird.

22. Verfahren nach einem der Ansprüche 21 oder 22, bei dem an der CD-Box nahe an oder mindestens teilweise über dem Etikett ein Adress-Aufkleber oder ein ähnliches Adress-Element angeordnet wird.

23. Verfahren zum Verwenden einer Anordnung nach einem der Ansprüche 1-13 oder einer Baugruppe nach einem der Ansprüche 14-17, bei dem in der Aufbewahrungsbox ein Datenträger wie z.B. eine CD oder Diskette eingeschlossen ist, von der ein Teil mit vor-aufgezeichneter Musik oder anderen Daten versehen ist, wobei dieser Teil vorzugsweise durch einen Nurlese-Schutz vor Manipulation geschützt ist, und wobei ein weiterer Teil vom Benutzer mit Daten versehen wird.

24. Verfahren zum Versenden einer Mitteilung, insbesondere von Wünschen oder Grüßen, bei dem ein thematisch gewählter Datenträger mit der gewünschten Information in einer Anordnung nach einem der Ansprüche 1-13 oder einer Baugruppe nach einem der Ansprüche 14-17 an den vorgesehenen Empfänger versandt wird, wobei vorzugsweise der Absender selbst einen Teil der Information liefert oder erzeugt.

25. Set aus einer Anzahl von Anordnungen nach einem der Ansprüche 1-13 oder einer Anzahl von Baugruppen nach einem der Ansprüche 14-17 und einer entsprechenden Anzahl von Etiketten, bei dem diese Komponenten zusammen verpackt sind.

26. Set nach Anspruch 25, bei dem eine entsprechende Anzahl von Bildpostkarten oder dergleichen mitverpackt ist.

27. Set nach Anspruch 25 oder 26, bei dem die Anordnungen oder Baugruppen, insbesondere die mitverpackten Datenträger und Bildpostkarten, thematisch einander angepasst sind.

## Revendications

1. Arrangement servant à expédier des disques compacts ou des supports de données plats analogues, comprenant une boîte de rangement (1) pour le support de données et une étiquette (6), dans lequel l'étiquette (6) comprend de préférence au moins un champ d'adresse (16), la boîte de rangement (1) étant fabriquée en plastique à haute résistance au choc et relativement haute élasticité, de sorte que la boîte de rangement (1) est au moins sensiblement incassable, la boîte de rangement (1) comprenant au moins deux parties de boîte (2, 3) qui sont rattachées l'une à l'autre par un moyen formant pivot (4), de sorte que la boîte (1) peut être ouverte et fermée, l'étiquette (6) étant conçue pour être attachée sur la boîte de rangement (1), de telle manière que les deux parties de boîte (2, 3) en position fermée sont rattachées l'une à l'autre par l'étiquette (6), à une certaine distance du moyen formant pivot (4), l'arrangement étant tel qu'un support de données dans la boîte de rangement (1) peut être bloqué entre les parties de boîte (2, 3), après quoi la boîte de rangement (1) peut être fermée et scellée par l'étiquette (6) et expédiée par courrier, sans autre emballage extérieur, à un destinataire stipulé sur l'étiquette (6); dans lequel l'étiquette comprend un premier panneau (7) sur lequel le champ d'adresse (16) est au moins substantiellement prévu, ledit premier panneau (7) étant rattaché à un deuxième panneau (8) via des moyens de pliage, le premier panneau (7) s'étendant, en service, sur une première des deux parties de boîte et étant fixé sur elle, tandis que le deuxième panneau (8) s'étend sur la deuxième partie de boîte opposée et est fixée sur elle et les moyens de pliage s'étendent au moins substantiellement contre un côté latéral de la boîte de rangement (1); dans lequel le premier panneau (7) et le deuxième panneau (8) sont rattachés l'un à l'autre par un panneau intermédiaire (27) qui est rattaché via des lignes de pliage (11, 12) respectives, sensiblement parallèles, au premier et au deuxième panneau (7, 8), la distance (D) entre les lignes de pliage correspondant à peu près à l'épaisseur de la boîte de rangement, le panneau intermédiaire appuyant contre un côté latéral de la boîte qui peut s'ouvrir; et dans lequel, sur deux côtés opposés du premier panneau (7), deux troisièmes panneaux (9) sont rattachés au premier panneau (7), de sorte que le premier panneau (7) peut être fixé sur une première partie de boîte et, quand la boîte de rangement est fermée, les troisièmes panneaux (9) peuvent être fixés contre le côté opposé de la deuxième partie de boîte par rapport à la première partie de boîte.

2. Arrangement selon la revendication 1, dans lequel l'étiquette (6) comprend une indication (20) de prépaiement des frais d'affranchissement.

3. Arrangement selon la revendication 1 ou 2, dans lequel la distance (W) entre les troisièmes panneaux (9) est à peu près égale à la largeur de la boîte de rangement (1), mesurée parallèlement aux côtés des parties de boîte (2, 3) qui sont rattachées par le moyen formant pivot (4).

4. Arrangement selon l'une quelconque des revendications 1 à 3, dans lequel le deuxième panneau (8) est rattaché, via les moyens de pliage, au premier panneau (7) le long d'un côté du premier panneau perpendiculaire aux côtés auxquels les troisièmes panneaux (9) sont rattachés, la longueur des troisièmes panneaux (9) et du premier panneau (7), mesurée perpendiculairement au deuxième panneau, étant inférieure ou égale à la longueur correspondante de la boîte de rangement (1).

5. Arrangement selon l'une quelconque des revendications précédentes, dans lequel un champ d'expéditeur (21) est prévu sur l'étiquette.

6. Arrangement selon l'une quelconque des revendications précédentes, dans lequel la boîte de rangement (1) est fabriquée en polypropylène ou en un plastique flexible et relativement élastique analogue, la boîte de rangement étant de préférence fabriquée d'une seule pièce.

7. Arrangement selon l'une quelconque des revendications précédentes, dans lequel une puce (64) ou un moyen à mémoire analogue est inclus dans la boîte de rangement (1), muni de moyens de production de sons, ladite puce étant de préférence activée au moins au cours de l'ouverture de la boîte de rangement.

8. Arrangement selon la revendication 7, dans lequel la puce est une puce musicale.

9. Arrangement selon la revendication 7 ou 8, dans lequel la puce est programmable, au moins conçue pour que des sons, tels que de la musique ou des paroles, puissent être enregistrés dessus de manière sélective par un utilisateur.

10. Arrangement selon l'une quelconque des revendications précédentes, dans lequel au moins un support de données est inclus avec de la musique, des paroles ou d'autres données enregistrées dessus.

11. Arrangement selon l'une quelconque des revendications 7 à 9 et 10, dans lequel les données enregistrées sur le support de données (5) sont en rapport, ou au moins thématiquement, avec des sons, au moins des données, enregistrés dans la puce.

12. Arrangement selon l'une quelconque des revendications précédentes, dans lequel un support de données (5) est prévu d'un type sur lequel des informations peuvent être enregistrées par un consommateur, au moins une portion de l'espace mémoire disponible sur le support de données étant préenregistré et une portion du support de données étant libre en vue d'un ajout d'informations par l'utilisateur.

13. Arrangement selon la revendication 12, dans lequel la portion préenregistrée du support de données est protégée contre l'écriture.

14. Ensemble composé d'un arrangement selon l'une quelconque des revendications précédentes et d'un élément de blocage (44), dans lequel l'élément de blocage est conçu pour être positionné sur ou adjacent à un bord d'un support de données (5) à placer dans la boîte de rangement (1), de telle manière qu'il est bloqué entre les parties de boîte (2, 3) et que, quand la boîte de rangement (1) est fermée, tout mouvement du support de données (5) à l'intérieur de la boîte de rangement est substantiellement empêché.

15. Ensemble selon la revendication 14, dans lequel l'élément de blocage (44) comprend au moins une fente (48) avec laquelle il est susceptible de glisser sur un bord longitudinal d'un support de données (5), l'élément de blocage (44) ayant une épaisseur (H), mesurée à peu près à angles droits d'une direction d'insertion de la fente, qui correspond sensiblement à la distance correspondante des côtés intérieurs des parties de boîte.

16. Ensemble selon la revendication 15, dans lequel au moins deux fentes (48) sont prévues dans l'élément de blocage (44), l'une au-dessus ou à côté de l'autre, sensiblement parallèles l'une à l'autre.

17. Ensemble composé d'un dispositif de rangement selon l'une quelconque des revendications 1 à 13 ou d'un ensemble selon l'une quelconque des revendications 14 à 16 et d'une carte postale illustrée (62), dans lequel la carte postale illustrée est enfermée dans la boîte de rangement ou bloquée entre la boîte de rangement et l'étiquette.

18. Etiquette (6) pour l'expédition d'une boîte de rangement (1) avec un CD ou un support de données analogue inclus dans cette dernière, ladite boîte de rangement (1) ayant l'épaisseur et la largeur habituelles d'un boîtier de CD de type boîte à bijoux, dans laquelle l'étiquette (6) comprend un premier panneau (7) et un deuxième panneau (8) qui lui est rattaché, un panneau intermédiaire (27) étant prévu entre le premier (7) et le deuxième panneau (8), ledit panneau intermédiaire (27) ayant une hauteur (D) entre le premier (7) et le deuxième panneau (8) qui correspond à peu près à ladite épaisseur de la boîte de rangement (1), et au moins le premier (7) et le deuxième panneau (8) étant pourvus, le long d'une portion de leurs bords longitudinaux, d'adhésifs pour les fixer sur un côté respectivement avant et arrière de la boîte de rangement (1), de telle manière que le panneau intermédiaire (27) appuie contre un côté de la boîte de rangement (1) qui peut s'ouvrir en service et dans laquelle un troisième panneau (9) est rattaché de chaque côté du premier panneau (7), lesdits troisièmes panneaux (9) étant agencés pour être attachés sur au moins des côtés opposés de la boîte de rangement (1), la largeur (W) du premier panneau compris entre les troisièmes panneaux (9) étant à peu près égale à ladite largeur de la boîte de rangement (1).

19. Etiquette selon la revendication 18, dans laquelle le deuxième panneau est rattaché aux troisièmes panneaux, de sorte que l'étiquette est un peu en forme de pochette et peut être glissée par un côté sur la boîte de rangement et ensuite collée dessus.

20. Procédé pour expédier un CD ou un support de données analogue en utilisant un arrangement selon l'une quelconque des revendications 1 à 13 ou un ensemble selon l'une quelconque des revendications 14 à 17, dans lequel on enferme le CD dans une boîte de CD, après quoi on colle une étiquette sur la boîte de CD, de telle manière que l'étiquette couvre au moins un côté de la boîte de CD à ouvrir, éloigné de son côté pivotant, et deux autres côtés, et est ajustée sur les deux parties pivotant l'une par rapport à l'autre, tandis que des moyens d'indication d'adresse et d'affranchissement sont prévus sur l'étiquette, au moins sur la boîte de CD, et la boîte de CD est expédiée sans autre emballage extérieur.

21. Procédé selon la revendication 20, dans lequel les moyens d'affranchissement sont imprimés sur l'étiquette, au moins fixement rattachés à elle, l'étiquette étant vendue avec les moyens d'affranchissement.

22. Procédé selon la revendication 20 ou 21, dans lequel un autocollant d'adresse ou moyen d'indication d'adresse analogue est prévu sur la boîte de CD, à côté de ou au moins partiellement sur l'étiquette.

23. Procédé d'utilisation d'un arrangement selon l'une quelconque des revendications 1 à 13 ou d'un ensemble selon l'une quelconque des revendications 14 à 17, dans lequel est enfermé dans la boîte de rangementun support de données, tel qu'un CD ou une disquette, dont une portion contient de la musique ou d'autres données préenregistrées, ladite portion étant de préférence protégée contre toute manipulation par une protection autorisant seulement la lecture, une autre portion étant pourvue de données par un utilisateur.

24. Procédé pour transmettre un message, en particulier des voeux ou des félicitations, dans lequel un support de données choisi thématiquement avec les informations souhaitées est expédié à un destinataire intentionnel dans un arrangement selon l'une quelconque des revendications 1 à 13 ou un ensemble selon l'une quelconque des revendications 14 à 17, dans lequel, de préférence, l'expéditeur lui-même fournit ou fait fournir une partie des informations.

25. Jeu comprenant un certain nombre d'arrangements selon l'une quelconque des revendications 1 à 13 ou un certain nombre d'ensembles selon l'une quelconque des revendications 14 à 17 et un nombre correspondant d'étiquettes, conditionnés ensemble.

26. Jeu selon la revendication 25, dans lequel un nombre correspondant de cartes postales illustrées ou analogues sont conditionnées avec.

27. Jeu selon la revendication 25 ou 26, dans lequel les arrangements et/ou ensembles, en particulier les supports de données et cartes postales illustrées conditionnées avec, sont appariés thématiquement l'un avec l'autre.
